# FASCICULE DE BREVET EUROPEEN

(11) **EP 0 743 257 B1**
(45) Date de publication et mention de la délivrance du brevet: **03.11.1999**
(21) Numéro de dépôt: 96400961.7
(22) Date de dépôt: 06.05.1996
(51) Int. Cl.: B65D 5/56, B65D 77/20, D21H 27/10

(54) **Barquette pour denrées consommables, notamment alimentaires, et procédé de fabrication de la barquette**
Verpackung für Verbrauchsgut, zum Beispiel Nahrungsmittel, und Verfahren für ihre Herstellung
Container for consumable products, for instance food, and method of making thereof

(30) Priorité: 15.05.1995 FR 9505707
(43) Date de publication de la demande: 20.11.1996
(60) Demande divisionnaire: 99106732.3
(73) Titulaire: Ahlstrom Industries SA, 94400 Vitry sur Seine Cedex (FR)
(72) Inventeur: Cartier, Noel, 38200 Vienne (FR); Glachant, Dominique, 75015 Paris (FR); Girard, Pierre, 38330 Saint Ismier (FR)
(74) Mandataire: Wagret, Frédéric

(56) Documents cités:
- EP-A- 0 670 386
- WO-A-93/25057
- US-A- 3 198 416
- US-A- 3 756 495
- US-A- 3 792 809

## Description

La présente invention relève du domaine de l'industrie du papier et de la cartonnerie, et concerne plus spécialement un conteneur ou récipient destiné au conditionnement de produits consommables tels que, par exemple, alimentaires, cosmétiques ou industriels (voir par exemple WO-A-93 25 057).

L'invention vise à répondre, dans le domaine alimentaire, aux besoins et au désir se développant chez les consommateurs de disposer de produits alimentaires conditionnés, empaquetés, prêts à l'emploi et, immédiatement disponibles sans préparation particulière.

L'invention permet de répondre aux besoins de consommateurs cherchant à faire leurs provisions de produits alimentaires sous forme de dose unitaire préparée et conditionnée, par conséquent facilement prélevée dans les rayons des points de vente en libre-service, ces produits empaquetés étant propres à une conservation plus ou moins longue, soit à la température ambiante, soit dans les rayons d'un réfrigérateur ou éventuellement d'un congélateur.

Lors de l'emploi, les produits peuvent ainsi être prélevés du lieu de stockage et utilisés soit à la température ambiante soit après un réchauffage dans un four d'ambiance ou à rayonnement infrarouge, ou encore du type four à micro-onde.

Les emballages actuellement utilisés et répondant à ces fins sont essentiellement constitués de barquettes, boîtes ou récipients en métal ou en matière plastique.

Ces conteneurs connus ne donnent pas entièrement satisfaction dans la mesure où ils ne sont pas biodégradables ni recyclables. Par définition à usage unique, ils sont jetés et se retrouvent dans les ordures ménagères dont l'accumulation pose de graves problèmes pour la collectivité; ils sont une source de pollution et d'encombrement. Les matières plastiques incinérées dégagent des gaz toxiques, ce qui nécessite de laver les fumées avant de permettre leur rejet dans l'atmosphère.

Dans le cadre de préoccupations écologiques, on cherche à remplacer les matériaux constituants les emballages perdus non récupérables et non biodégradables notamment à base de feuilles d'aluminium ou de matière synthétique, par des matériaux soit recyclables, soit biodégradables, soit encore susceptibles d'incinération et par conséquent susceptibles de fournir des calories mais sans dégager de gaz toxiques.

Il apparaît également souhaitable, notamment dans le cadre de produits alimentaires soumis à une conservation prolongée, d'éviter les matériaux de synthèse dont les molécules sont susceptibles de transiter et de migrer depuis la matière d'enveloppement vers et au sein du produit contenu, notamment lors du réchauffage des denrées.

De plus, les matériaux utilisés traditionnellement pour la réalisation de barquettes rigides permettent mal le passage direct du produit alimentaire dans son récipient de stockage dans une enceinte de réchauffement, lorsqu'il s'agit par exemple de préparations alimentaires destinées à être consommées, soit après une cuisson finale, soit après même un simple réchauffement. Les matières métalliques ne se prêtent pas au passage dans un four à micro-onde, en raison de leur conductivité électrique; et les barquettes ou récipients de stockage en matière de synthèse, souvent de nature thermoplastique, ne résistent pas à une élévation de température compatible avec une cuisson finale ou avec un réchauffement satisfaisant des produits alimentaires.

Un autre objectif de l'invention, outre de pallier aux inconvénients sur le plan de la charge pollutive supportée par la collectivité, est de répondre au souhait du consommateur de disposer d'un récipient apte à permettre un stockage éventuellement prolongé, ce même récipient pouvant être, lors de la phase préparatoire et précédant la consommation, soumis à un réchauffement soit dans un four d'ambiance, soit dans un four à rayonnement infrarouge, soit encore dans un four à micro-onde.

Aucun matériau actuellement utilisé pour le conditionnement et la conservation de produits alimentaires ne répond cumulativement à ces divers impératifs.

Un objet de la présente invention de proposer des gammes de récipients ou conditionnements, notamment sous forme de barquettes, susceptibles d'être occlus tout en étant facilement ouverts lors de la phase finale précédant la consommation, ces récipients étant aptes après une phase de conservation, à subir une phase de réchauffement éventuelle soit aux fins d'une cuisson finale soit en vue de les amener à la température appropriée, sans transvasement, le produit étant ainsi susceptible de passer directement de l'enceinte de stockage (simple armoire, réfrigérateur ou congélateur), dans l'assiette ou sur la table de consommation, qu'il s'agisse de la table familiale ou d'une table de restauration collective.

A cet effet, l'invention concerne un récipient permettant de contenir et conserver des produits consommables tels que des denrées notamment alimentaires et aptes à subir un traitement d'élévation thermique immédiatement avant leur consommation, tel que défini par la revendication 1.

Avantageusement la colle résistant à l'humidité est à compatibilité alimentaire et thermorésistante.

Selon une autre caractéristique, le récipient est pourvu d'un opercule constitué d'une feuille étanche souple scellée sur les bords supérieurs dudit récipient et apte à être retirée par simple pelage. En variante, un couvercle rigide emboîté est prévu.

L'invention concerne également un procédé pour la réalisation d'un récipient en vue de contenir et conserver des produits, tels que, par exemple, des denrées alimentaires, caractérisée par les opérations suivantes:
a) on réalise par contrecollage un complexe formé d'au moins un papier ingraissable, du type sulfurisé, et destiné à constituer la face intérieure du récipient, ladite feuille étant associée au moyen d'une colle résistant à l'eau, à une feuille extérieure en matériau fibreux (papier, carton) ;
b) on humidifie au moins la face constituée du papier ingraissable en vue de rendre ladite feuille malléable;
c) on forme des rainures ou cannelures dans ledit complexe selon les lignes futures de repli des faces devant être rabattues;
d) on conforme la feuille selon une structure en trois dimensions par repli des faces définies par l'espace entre lesdites rainures ou cannelures en vue de constituer un volume en creux constituant lui-même un espace récepteur des produits alimentaires contenus;
e) on solidarise par collage les faces venant en contact après ledit repli afin de solidariser et de stabiliser l'ensemble volumique ainsi formé.

Avantageusement, dans le cas du procédé ci-dessus l'humidification de la feuille sulfurisée incorpore un degré d'humidité compris entre 5 et 30% et de préférence égal à 12%.

Selon une variante, on réalise un complexe formé d'une part d'une feuille de papier ingraissable (de préférence en papier sulfurisé véritable) associée, au moyen d'une colle résistant à l'eau, à une couche de papier ou carton.

L'ensemble est soumis à thermoformage par un jeu de matrices et poinçons de conformation complémentaire et soumis à chauffage en cours d'opération.

Avantageusement, la colle utilisée pour assurer le complexe formé de la feuille de papier ingraissable et de la feuille extérieure, est une colle monocomposant à base de polyuréthanne, plus spécialement, par exemple, une colle connue sous la dénomination commerciale SWIFT EC1 2340.

L'invention concerne également un récipient caractérisé en ce que le complexe comporte une troisième couche associée à la couche extérieure en papier ou carton, du côté opposé à la face constituée par le papier ingraissable, cette troisième couche extérieure étant constituée d'une feuille de papier ou carton, apte à procurer une amélioration de l'esthétique, de l'ingraissabilité et de la résistance mécanique et permettant de recevoir des inscriptions informatives ou commerciales sur le produit contenu. La troisième feuille extérieure peut être du type ingraissable, en papier sulfurisé, en papier couché, ou tout type de papier ou carton.

Selon une autre caractéristique, les bords du récipient ou de la barquette ainsi conformé sont rabattus selon un plan horizontal et constituant la surface d'appui pour recevoir un opercule de fermeture de l'espace intérieur du récipient, cet opercule étant solidarisé par scellement sur ladite face d'appui et étant amovible par simple pelage manuel.

Selon une caractéristique plus particulière, le papier ingraissable du type sulfurisé est prévu avec un grammage variant de 25 g/m² à 150 g/m², et plus précisément de 40 à 70 g/m², tandis que la feuille extérieure associée est un carton de grammage compris entre 200 et 600 g/m², qui peut être du type couché.

D'autres caractéristiques et avantages de l'invention ressortiront de la description qui suit et qui présente quelques exemples de réalisation présentés à titre illustratif et sans caractère limitatif.

La figure 1 représente une vue en coupe d'une barquette selon l'invention, selon une première forme de réalisation ; et

La figure 2 en représente une variante de réalisation.

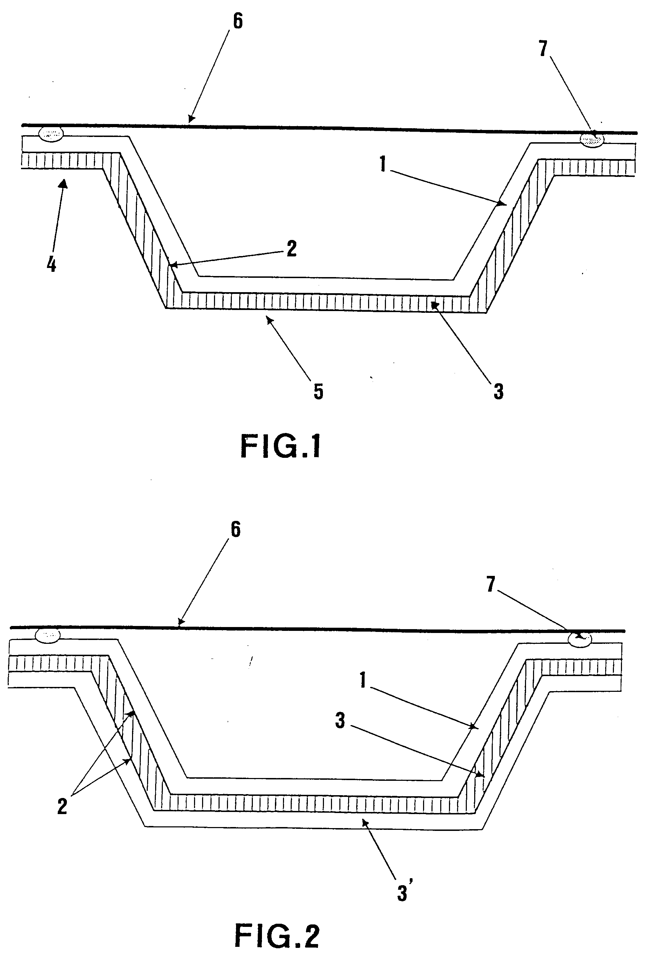

Les figures 1 et 2 se rapportent à une forme de réalisation de l'invention dans laquelle la barquette est réalisée à partir d'un complexe associant une couche de papier sulfurisé et une feuille de carton.

Selon les deux figures, on voit que l'on a réalisé un complexe comportant une couche, qui deviendra la face intérieure future du récipient après sa conformation, et formée de papier ingraissable, et plus particulièrement dans l'exemple montré, de papier sulfurisé.

La couche formée du papier sulfurisé 1 est contrecollée par une couche de colle interstitielle 2 sur la couche de carton 3 qui conformera la face extérieure de la barquette.

Dans cet exemple, la feuille de papier sulfurisé est prévue avec un grammage relativement léger et variant de 25 g/m² à 150 g/m², et de préférence entre 40 et 70 g/m², tandis que le carton est constitué d'une feuille de carton de grammage d'environ 250 g/m².

La colle est une colle de nature organique permettant de constituer une barrière à l'eau; on utilisera avantageusement le produit connu sous la dénomination commerciale SWIFT EC1 2340, produit par la société SWIFT ADHESIFS FRANCE.

La feuille plane ainsi constituée et conformant le complexe destiné à la réalisation du récipient ou de la barquette selon l'invention est ensuite mise en forme de façon à définir un espace récepteur du produit, notamment du produit alimentaire.

La mise en forme peut être effectuée de deux façons.

Selon une première méthode, on conforme selon un plan déterminé des rainures ou des cannelures représentant une configuration géométrique voulue et ces rainures ou cannelures définissant les angles de repli des faces du récipient lors de sa mise en forme.

Ces opérations peuvent être effectuées en continu sur des machines de type connu dans l'industrie de la cartonnerie et utilisées habituellement pour la conformation de boîtes; après relèvement des faces et repli l'une contre l'autre des parois venant en contact, ces dernières sont solidarisées entre elles de façon à assurer la stabilité de l'ensemble; on obtient ainsi un volume creux défini par les parois repliées du complexe et conformant la barquette prévue pour la réception des denrées de produits alimentaires convenablement dosés.

Selon une seconde méthode de réalisation, le complexe est mis en forme en une seule opération de thermoformage, dans laquelle le complexe est pris entre une empreinte en creux ou matrice et une empreinte en relief de conformation correspondante ou poinçon. Matrice et poinçon sont chauffés et permettent d'assurer et de stabiliser la déformation des parois qui sont relevées à partir du fond pour conformer la barquette finale voulue. Dans cette opération, et préalablement au passage dans la machine d'estampage ou de thermoformage, l'ensemble et notamment la face constituée par le papier sulfurisé 1 est soumis à un ramollissement par imprégnation partielle ou conditionnement par passage dans un caisson vapeur.

L'invention n'est pas limitée au mode de réalisation décrit ci-dessus, mais inclut toute variante. Par exemple, la feuille extérieure, sur laquelle est collée ou contrecollée la feuille intérieure de papier du type ingraissable, peut être elle-même constituée d'un papier sulfurisé. Il est possible d'associer les deux feuilles (intérieure et extérieure) de sulfurisé sans l'apport de colle, par fixation et association des deux feuilles de sulfurisé lors de la fabrication de ces dernières. Plus particulièrement, les deux feuilles de papier sulfurisé sont solidarisées par le gel de cellulose engendré lors de la fabrication du sulfurisé.

En ce qui concerne la feuille intérieure de matériau du type ingraissable et sulfurisé, celle-ci peut être soit monocouche, soit multicouche, c'est-à-dire elle-même constituée de plusieurs couches de papiers différents, concourant au même but et présentant des propriétés d'ingraissabilité.

Enfin, les matériaux de type ingraissable et sulfurisé, peuvent être soumis à tout type de traitement pour aboutir à un papier sulfurisé du type siliconé, quiloné ou traité de toute autre manière connue.

Par ailleurs, le récipient de l'invention n'est pas limité à contenir ou conserver des produits alimentaires, mais peut également être appliqué au domaine de la cosmétologie, pour des crèmes, shampooings, ou produits similaires, ou de l'industrie en général, pour des colles, peintures, mastics, ou produits similaires.

## Revendications

1. Récipient permettant de contenir et conserver des produits consommables, tels que, par exemple, des denrées alimentaires, caractérisé en ce qu'il est constitué d'un complexe formé d'au moins une feuille de papier (1) conformant la paroi intérieure du récipient, cette feuille de papier étant du type ingraissable constitué de papier sulfurisé et contrecollée sur une feuille extérieure de papier ou carton (3), par une couche interstitielle (2) constituée d'une colle résistant à l'humidité et à la chaleur, et notamment à compatibilité alimentaire, l'ensemble étant mis en forme pour réserver un volume de réception du produit contenu.

2. Récipient selon la revendication 1, caractérisé en ce qu'il est pourvu d'un opercule constitué d'une feuille étanche (6) souple, scellée sur les bords supérieurs (4) audit récipient et apte à être retiré par simple pelage.

3. Récipient selon l'une des revendications 1 ou 2, caractérisé en ce que la colle utilisée pour assurer le complexe formé de la feuille de papier ingraissable, et la feuille extérieure de papier ou carton, est une colle à base de résine organique.

4. Récipient selon la revendication 3, caractérisé en ce que la colle est du type connu sous la dénomination commerciale SWIFT EC 1 2340.

5. Récipient selon l'une des revendications 1 à 4, caractérisé en ce que le complexe comporte une troisième couche constituée d'une feuille de papier ingraissable, la couche de papier ou carton étant prise en sandwich entre la couche intérieure et ladite troisième couche.

6. Récipient selon l'une des revendications 1 à 5, caractérisé en ce que le papier ingraissable présente un grammage compris entre 25g/m² et 150g/m², de préférence entre 40 et 70g/m², tandis que la feuille extérieure associée est un carton de grammage compris entre 200 et 600g/m².

7. Récipient selon la revendication 1, caractérisé en ce que la feuille extérieure est constituée de papier sulfurisé.

8. Récipient selon la revendication 5, caractérisé en ce que la couche intérieure et/ou la troisième couche est/sont du type papier sulfurisé.

9. Procédé pour la réalisation d'un récipient en vue de contenir et conserver des produits consommables (denrées alimentaires), caractérisé par les opérations suivantes :
a) on réalise par contrecollage un complexe formé d'au moins un papier ingraissable du type sulfurisé et destiné à constituer la face intérieure du récipient, ladite feuille étant associée par complexage au moyen d'une colle résistant à l'eau (2), à une feuille (3) extérieure en matériau fibreux (papier, carton ou analogues);
b) on humidifie au moins la face constituée du matériau ingraissable, en vue de rendre ladite feuille malléable;
c) on forme des rainures ou cannelures dans ledit complexe selon les lignes futures de repli des faces devant être rabattues;
d) on conforme la feuille selon une structure en trois dimensions par repli des faces définies par l'espace entre lesdites rainures ou cannelures en vue de constituer un volume en creux constituant lui-même un espace récepteur des denrées contenues;
e) on solidarise par collage les faces venant en contact après ledit repli afin de solidariser et de stabiliser l'ensemble volumique ainsi formé.

10. Procédé selon la revendication 9, caractérisé en ce que l'humidification de la feuille de matériau du type ingraissable (1) incorpore un degré d'humidité compris entre 5 et 30% et de préférence égal à 12%.

11. Procédé selon l'une des revendications 9 ou 10, caractérisé en ce que l'on réalise un complexe formé d'une part d'une feuille de papier ingraissable (1), associée au moyen d'une colle résistant à l'eau (2) et à la chaleur, à une couche de papier ou carton (3), on humidifie au moins la couche de sulfurisé, puis l'ensemble est soumis à thermoformage par un jeu de matrices et poinçons de conformations complémentaires, les matrices et poinçons étant soumis à chauffage en cours d'opération.

12. Procédé selon l'une des revendications 9 à 11, caractérisé en ce que la feuille en matériau ingraissable est constituée de papier sulfurisé.

## Claims

1. Container for containing and conserving consumable products, such as for example foodstuffs, characterized in that it is constituted by a complex formed by at least one sheet of paper (1) shaping the inner wall of the container, this sheet of paper being of the greaseproof type constituted by vegetable parchment and bonding on an outer paper or cardboard sheet (3), by an interstitial layer (2) constituted by a wet- and heat-resistant glue and in particular compatible with food, the whole being shaped in order to reserve a volume for receiving the product contained.

2. Container according to Claim 1, characterized in that it is provided with a cover constituted by a supple, tight sheet (6) sealed on the upper edges (4) of said container and adapted to be removed simply by being peeled off.

3. Container according to one of Claims 1 or 2, characterized in that the glue used for making the complex formed by the sheet of greaseproof paper and the outer paper or cardboard sheet, is a glue based on organic resin.

4. Container according to Claim 3, characterized in that the glue is of the type known under the Trademark SWIFT EC 1 2340.

5. Container according to one of Claims 1 to 4, characterized in that the complex comprises a third layer constituted by a sheet of greaseproof paper, the layer of paper or cardboard being sandwiched between the inner layer and said third layer.

6. Container according to one of Claims 1 to 5, characterized in that the greaseproof paper presents a G.S.M. included between 25 g/m² and 150 g/m², preferably between 40 and 70 g/m², while the associated outer sheet is a cardboard with a G.S.M. included between 200 and 600 g/m².

7. Container according to Claim 1, characterized in that the outer sheet is constituted by vegetable parchment.

8. Container according to Claim 5, characterized in that the inner layer and/or the third layer is/are of the vegetable parchment type.

9. Method for making a container for containing and conserving consumable products (foodstuffs), characterized by the following operations:
a) making, by lamination, a complex formed by at least one greaseproof paper of the vegetable parchment type and intended to constitute the inner face of the container, said sheet being associated by complexing by means of a water-resistant glue (2), with an outer sheet (3) made of fibrous material (paper, cardboard or the like);
b) humidifying at least the face constituted by the greaseproof material, with a view to rendering said sheet malleable;
c) forming grooves or flutings in said complex along the future lines of fold of the faces having to be folded down;
d) shaping the sheet in a three-dimensional structure by folding the faces defined by the space between said grooves or flutings with a view to constituting a hollow volume itself constituting a space for receiving the foodstuffs contained;
e) connecting by gluing the faces coming into contact after said folding, in order to connect and stabilize the volumic assembly thus formed.

10. Method according to Claim 9, characterized in that humidification of the sheet of material of the greaseproof type (1) incorporates a degree of humidity included between 5 and 30% and preferably equal to 12%.

11. Method according to one of Claims 9 or 10, characterized in that a complex is formed, on the one hand, from a sheet of greaseproof paper (1), associated, by means of a water- and heat-resistant glue (2), with a layer of paper or cardboard (3), at least the layer of vegetable parchment is humidified, then the assembly is subjected to thermo-forming by a set of dies and punches of complementary shapes, the dies and punches being subjected to heating during operation.

12. Method according to one of Claims 9 to 11, characterized in that the sheet of greaseproof material is constituted by vegetable parchment.

## Patentansprüche

1. Behälter zum Beinhalten und Aufbewahren von Verbrauchsgütern, wie zum Beispiel Nahrungsmittel,
**dadurch gekennzeichnet, daß** er sich aus einem Verbund zusammensetzt, welcher aus wenigstens einem die innere Wand des Behälters bildenden Papierbogen (1) besteht, wobei dieser Papierbogen, der fettdicht ist und aus Pergamentpapier besteht, mit einem äußeren Papier- oder Kartonbogen (3) mittels einer Zwischenlage (2) aus einem feuchtigkeits- und hitzeständigen und insbesondere nahrungsmittelverträglichen Klebstoff kaschiert wird, und wobei die Anordnung geformt wird, um ein Volumen zur Aufnahme des zu beinhaltenden Produktes bereitzustellen.

2. Behälter nach Anspruch 1,
**dadurch gekennzeichnet, daß** er mit einem Deckel ausgestattet ist, der aus einem dichten, nachgiebigem Bogen (6) gebildet wird, der auf den Oberrändern (4) des genannten Behälters diesen dicht abschließt und geeignet ist, durch ein einfaches Abziehen abgezogen zu werden.

3. Behälter nach einem der Ansprüche 1 oder 2,
**dadurch gekennzeichnet, daß** der zur Kaschierung des aus dem fettdichten Papierbogen und dem äußeren Papier- oder Kartonbogen gebildeten Verbundes verwendete Klebstoff, ein Klebstoff auf der Grundlage eines organischen Harzes ist.

4. Behälter nach Anspruch 3,
**dadurch gekennzeichnet, daß** der Klebstoff von der Art ist, die unter der Handelsbezeichnung SWIFT EC 1 2340 bekannt ist.

5. Behälter nach einem der Ansprüche 1 bis 4,
**dadurch gekennzeichnet, daß** der Verbund eine dritte Lage aus einem fettdichten Papierbogen aufweist, wobei in einer übereinandergeschichteter Anordnung die Papier- oder Kartonlage zwischen die innere Lage und die genannte dritte Lage gelegt ist.

6. Behälter nach einem der Ansprüche 1 bis 5,
**dadurch gekennzeichnet, daß** das fettdichte Papier ein Quadratmetergewicht hat, das zwischen 25 g/m² und 150 g/m², vorzugsweise zwischen 40 g/m² und 70 g/m² liegt, während der damit verbundene äußere Bogen ein Karton ist, dessen Quadratmetergewicht zwischen 200 g/m² und 600 g/m² liegt.

7. Behälter nach Anspruch 1,
**dadurch gekennzeichnet, daß** das der äußere Bogen aus Pergamentpapier gebildet wird.

8. Behälter nach Anspruch 5,
**dadurch gekennzeichnet, daß** die innere Lage und/oder die dritte Lage von der Art eines Pergamentpapiers ist/sind.

9. Verfahren zur Herstellung eines Behälters zum Umschließen und Aufbewahren von Verbrauchsgütern (Nahrungsmittel), gekennzeichnet durch die folgenden Schritte:
a) man stellt durch Kaschierung einen Verbund her, der sich aus wenigstens einem Bogen aus einem fettdichten Papier von der Art eines Pergamentpapiers, der die Innenseite des Behälters bilden soll, zusammensetzt, wobei der genannte Bogen durch die Verbindung mittels eines wasserbeständigen Klebstoffes (2) mit einem äußeren Bogen (3) aus einem faserhaltigen Material (Papier, Karton oder entsprechendes) verbunden ist;
b) man befeuchtet wenigstens die aus dem fettdichten Material gebildete Seite, um den genannten Bogen geschmeidig zu machen;
c) man bildet in dem genannten Verbund, entsprechend den zukünftigen Seitenumschlagslinien und vor dem Umschlagen, Einkerbungen und Rillen;
d) man gestaltet den Bogen entsprechend einer dreidimensionalen Struktur durch Umschlagen der durch den Abstand zwischen den genannten Einkerbungen und Rillen definierten Seiten, um so einen Hohlraum zu bilden, der seinerseits einen Raum zur Aufnahme der umschlossenen Güter darstellt;
e) man befestigt durch Verklebung die nach dem Umschlagen in Kontakt gekommenen Seiten, um die so gebildete Hohlraumanordnung zu verfestigen und zu stabilisieren.

10. Verfahren nach Anspruch 9,
**dadurch gekennzeichnet, daß** die Befeuchtung des Bogens aus einem fettdichten Material (1) zu einem Feuchtigkeitsgehalt führt, der zwischen 5 und 30 % liegt und vorzugsweise gleich 12% ist.

11. Verfahren nach einem der Ansprüche 9 oder 10,
**dadurch gekennzeichnet, daß** man einen Verbund herstellt, der auf einer Seite von einem fettdichten Papierbogen (1) gebildet wird, der mittels eines wasser- und hitzebeständigen Klebstoffes (2) mit einer Papier- oder Kartonlage (3) verbunden ist, man befeuchtet wenigstens die Lage aus Pergamentpapier, dann wird das Gesamte einer Wärmeformgebung durch einen Satz von Preßformen und Stempeln mit komplementärer Form unterworfen, wobei die Preßformen und Stempel im Laufe des Vorganges erhitzt werden.

12. Verfahren nach einem der Ansprüche 9 bis 11,
**dadurch gekennzeichnet, daß** der Bogen aus einem fettdichten Material aus Pergamentpapier gebildet wird.
